# FASCICULE DE BREVET EUROPEEN

(11) **EP 2 961 647 B1**
(45) Date de publication et mention de la délivrance du brevet: **04.04.2018**
(21) Numéro de dépôt: 14710027.5
(22) Date de dépôt: 17.02.2014
(51) Int. Cl.: B62D 25/08, B62D 25/20, B62D 29/00, B62D 29/04

(54) **PLANCHER ARRIERE DE CHARGE EN MATIERE COMPOSITE POUR VÉHICULE AUTOMOBILE**
HECKLADEBODENPLATTE AUS VERBUNDSTOFF FÜR EIN KRAFTFAHRZEUG
REAR LOADING FLOOR PANEL MADE OF COMPOSITE MATERIAL FOR A MOTOR VEHICLE

(30) Priorité: 01.03.2013 FR 1351861
(43) Date de publication de la demande: 06.01.2016
(73) Titulaire: PSA Automobiles SA, 78300 Poissy (FR)
(72) Inventeur: BERGER, Flavien, F-25630 Ste Suzanne (FR); CONVERS, Germain, F-25200 Bethoncourt (FR); LANCEMOT, Amandine, F-25250 Blussans (FR); ROBERT, Pascal, F-25550 Bavans (FR); LE BARS, Franck, F-33200 Bordeaux (FR); MORLOT, Lionel, F-70200 Frotey Les Lure (FR)
(74) Mandataire: Fosse, Danièle
(86) Numéro de dépôt international: PCT/FR2014/050329
(87) Numéro de publication internationale: WO 2014/131967

(56) Documents cités:
- EP-A2- 1 612 127
- DE-A1- 10 342 603
- DE-A1-102004 052 668
- FR-A1- 2 916 673
- JP-A- S63 121 575

## Description

La présente invention concerne un plancher arrière de charge en matière composite pour véhicule automobile.

L'invention concerne également un véhicule automobile comportant un plancher arrière de charge de ce type.

Le plancher arrière de charge des véhicules automobiles est le plus souvent réalisé entièrement en tôle d'acier.

Ce plancher arrière en tôle d'acier est soudé par points à la partie arrière du soubassement, grâce à une pince de soudage qui est déplacée par un robot au poste de ferrage ou sont assemblées toutes les pièces en tôle du véhicule.

L'inconvénient d'un tel plancher en tôle d'acier est qu'il présente une masse élevée.

On connaît par ailleurs un plancher arrière de charge en matière composite constituée par une résine en matière plastique chargée de fibres.

Un tel plancher présente une masse nettement moins élevée que celle d'un plancher en tôle d'acier.

L'inconvénient de ces planchers en matière composite est que leur fixation au soubassement du véhicule ne peut pas être effectuée au poste de ferrage car elle nécessite un montage spécifique par collage et vissage et par conséquent un personnel supplémentaire qui grève les coûts de fabrication.

**On connaît par** DE 10342603 **un élément composite de carrosserie comportant une pièce de métal insérée dedans et en saillie dudit élément composite pour permettre une liaison par soudage avec un élément de structure métallique.**

Le but de la présente invention est de remédier à cet inconvénient.

Ce but est atteint, selon l'invention, grâce à un **plancher arrière de charge en matière composite pour véhicule automobile constituée par une résine en matière plastique chargée de fibres, la périphérie du plancher comportant une bordure en métal destinée à être soudée à la partie arrière en métal du soubassement d'un véhicule automobile, caractérisé en ce que ladite bordure en métal est liée par surmoulage à ladite matière composite, et forme un cadre constitué de quatre parties à savoir une partie avant, une partie arrière et deux parties latérales, dont les parties avant et arrière sont embouties et les deux parties latérales sont obtenues par profilage.**

Ainsi, grâce à cette bordure en métal, le plancher arrière en matière composite peut être soudé au soubassement, au poste de ferrage, comme les planchers entièrement en métal.

L'invention évite ainsi le montage évoqué plus haut qui nécessite une opération de collage et de vissage coûteuse en main d'oeuvre.

De plus, le plancher de charge dont la majeure partie est en matière composite permet un gain très substantiel de masse qui permet de réduire la consommation du véhicule.

Cette opération ne nécessite aucun moyen de fixation supplémentaire car elle est réalisée en même temps que le moulage du plancher.

Dans un mode de réalisation préféré, ladite bordure en métal est en tôle d'acier soudable par points de soudure électrique ou par laser à la tôle d'acier constituant la partie arrière du soubassement du véhicule.

Ainsi, le plancher selon l'invention peut être manipulé et soudé au soubassement dans le poste de ferrage tout comme un plancher entièrement en acier.

De préférence, ladite tôle d'acier de ladite bordure présente les mêmes caractéristiques que celles de la tôle d'acier d'un plancher arrière entièrement constituée par une tôle d'acier.

De ce fait, les robots du poste de ferrage utilisés pour déplacer les pinces de soudage ne feront aucune différence entre un plancher selon l'invention et un plancher entièrement en acier.

De préférence, lesdites parties comprennent chacune une première paroi destinée à être appliquée et soudée à une partie arrière sensiblement horizontale du soubassement du véhicule et une seconde paroi perpendiculaire à ladite première paroi qui est liée par surmoulage à la matière composite du plancher.

Selon une particularité avantageuse de l'invention, ladite seconde paroi présente des trous permettant le passage de la matière composite lors du surmoulage.

Ces trous de passage permettent d'obtenir une liaison optimale entre la matière composite et chacune des parties de la bordure métallique.

Dans une variante de réalisation de l'invention, ladite bordure en métal est liée par surmoulage à une couche en matière plastique souple qui recouvre partiellement cette bordure, ladite matière composite étant surmoulée sur cette couche en matière plastique souple.

Cette couche en matière souple située entre la bordure et la matière composite permet en cas de besoin de désaccoupler le plancher en matière composite par rapport à la bordure en métal.

De préférence, ladite bordure en métal comporte des trous permettant le passage de la matière plastique souple constituant ladite couche.

Dans un mode de réalisation particulièrement avantageux de l'invention, ladite couche en matière plastique souple présente en regard de chacun desdits trous des excroissances en saillie sur la surface extérieure de ladite couche.

Ces excroissances en saillie permettent d'assurer un ancrage de la matière composite à la couche en matière plastique souple, tout en permettant de désaccoupler le plancher en matière composite par rapport à la bordure en métal.

Selon un autre aspect, l'invention concerne également un véhicule automobile comportant un plancher arrière de charge selon l'invention.

De préférence, la bordure en métal du plancher est soudée par points ou par laser à la partie arrière en métal du soubassement du véhicule, lors du ferrage de ce dernier.

D'autres particularités et avantages de l'invention apparaîtront encore tout au long de la description ci-après.

Aux dessins annexés, donnés à titre d'exemples, non limitatifs :
- la figure 1 est une vue en perspective d'un plancher de charge, en matière composite, selon l'invention,
- la figure 2 est une vue des quatre parties de la bordure en tôle d'acier du plancher, selon l'invention,
- la figure 3 est une vue analogue à la figure 2, montrant les quatre parties avant surmoulage de la matière composite,
- la figure 4 est une vue agrandie du détail A de la figure 3,
- la figure 5 est une vue en coupe suivant le plan V-V de la figure 4 montrant le surmoulage de la matière composite du plancher,
- la figure 6 est une vue en perspective d'un plancher selon l'invention en position d'assemblage contre le soubassement d'un véhicule montrant les deux bras d'une pince de soudage en position pour souder la bordure du plancher contre le soubassement,
- la figure 7 est une vue agrandie du détail B de la figure 6,
- la figure 8 est une vue en perspective montrant la couche de matière plastique souple appliquée sur la bordure en métal,
- la figure 9 est une vue en coupe suivant le plan IX-IX,
- la figure 10 est une vue analogue à la figure 8 montrant le plancher en matière composite surmoulé sur la couche en matière souple,
- la figure 11 est une vue en coupe suivant le plan XI-XI de la figure 10,
- la figure 12 est une vue en coupe transversale du plancher représenté sur les figures 10 et 11 après sa fixation au soubassement d'un véhicule.

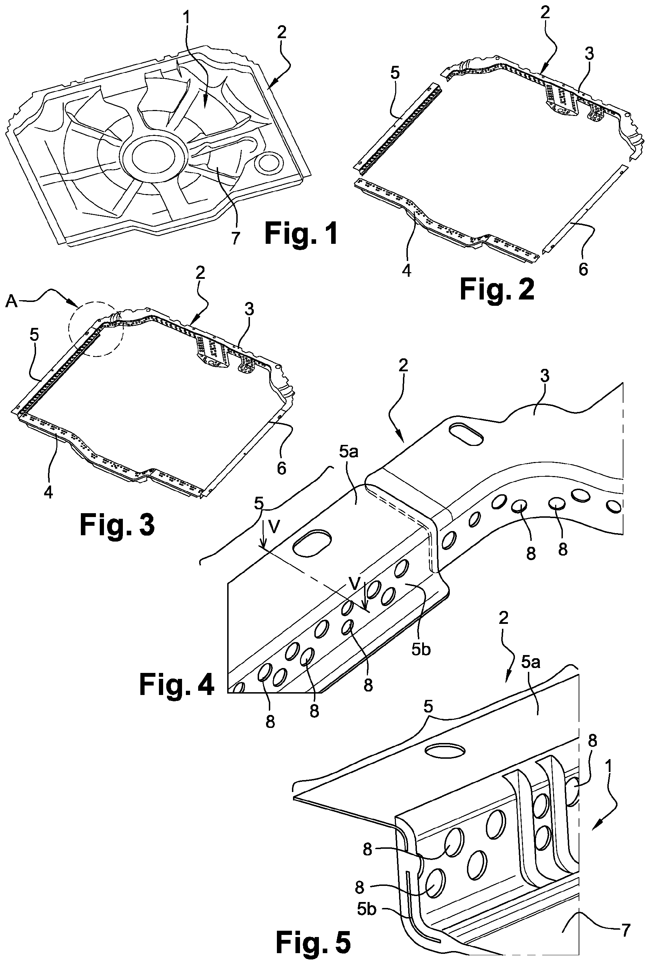

La figure 1 représente un plancher de charge en matière composite 1 constituée principalement par une résine en matière plastique telle qu'une résine polyester.

Dans cet exemple, le plancher 1 comprend une cavité apte à recevoir une roue de secours et présente des reliefs et des nervures de renforcement pour rendre le plancher 1 apte à supporter la charge.

Conformément à l'invention, la périphérie du plancher 1 comporte une bordure en métal 2 destinée à être soudée à la partie arrière du soubassement d'un véhicule automobile, comme dans le cas d'un plancher de charge entièrement en métal.

Cette bordure 2 en métal est de préférence liée par surmoulage à la résine de la matière composite du plancher 1.

Cette bordure 2 est de préférence en tôle d'acier soudable par points de soudure électrique ou par laser à la tôle d'acier constituant la partie arrière du soubassement du véhicule automobile.

Ces soudures peuvent être réalisées dans l'atelier de ferrage, comme dans le cas des planchers entièrement en tôle d'acier.

A cet effet, la tôle d'acier de la bordure 2 présente les mêmes caractéristiques que celles de la tôle d'acier d'un plancher arrière entièrement constituée par une tôle d'acier.

Dans l'exemple des figures 2 et 3, la bordure 2 forme un cadre constitué de quatre parties, à savoir une partie avant 3, une partie arrière 4 et deux parties latérales 5, 6.

Les parties avant 3 et arrière 4 peuvent être embouties et les deux parties latérales 5, 6 peuvent être obtenues par profilage.

Les quatre parties 3, 4, 5, 6 de la bordure 2 en forme de cadre comprennent chacune, comme montré sur la figure 4, une première paroi 5a destinée à être appliquée et soudée à une partie arrière sensiblement horizontale du soubassement du véhicule et une seconde paroi 5b perpendiculaire à la première paroi 5a qui est liée par surmoulage à la matière composite 7 du plancher 1, comme indiqué sur la figure 5.

Les figures 4 et 5 montrent également que la seconde paroi 5b de chaque partie telle que la partie 5 présente des trous 8 permettant le passage de la matière composite 7 lors du surmoulage.

Ainsi, la matière composite 7 recouvre les deux faces de la paroi verticale 5b et chaque partie 3, 4, 5, 6 de la bordure 2 est solidement ancrée à la matière composite 7 grâce aux trous de passage 8.

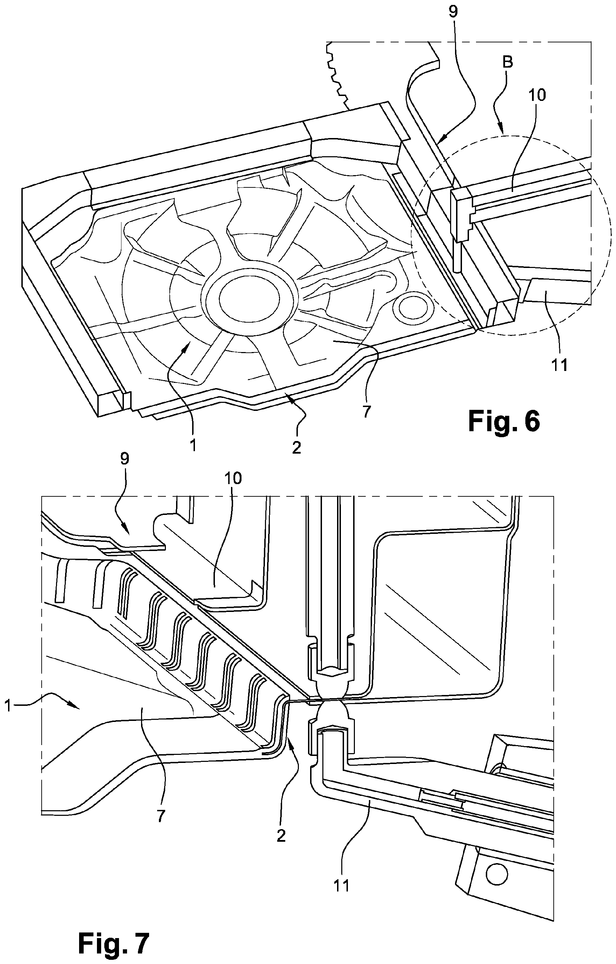

L'ensemble constitué par le plancher 1 en matière composite et la bordure en tôle d'acier peut être déplacé facilement dans l'atelier de ferrage, grâce par exemple à des ventouses portées par des robots vers la partie arrière du soubassement 9, montré sur les figures 6 et 7.

Ces figures 6 et 7 montrent également les deux bras 10, 11 d'une pince de soudage portée par un robot en position pour réaliser un point de soudage électrique entre la bordure 2 en tôle d'acier du plancher 1 et une partie en tôle d'acier du soubassement 9.

L'assemblage entre la bordure 2 en tôle d'acier et le soubassement 9 peut également être réalisé par soudure laser.

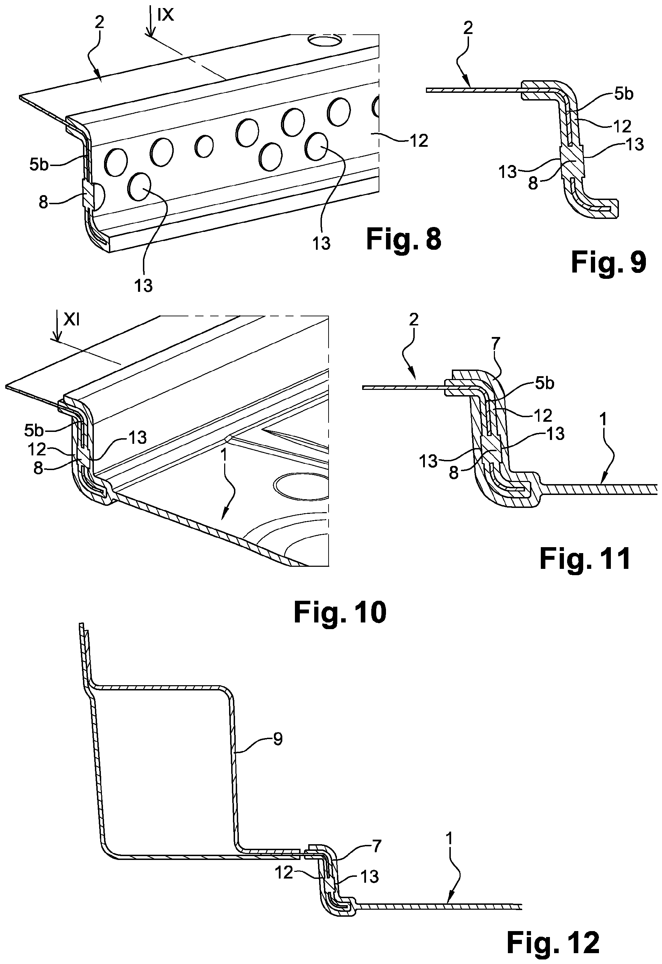

Les figures 8 à 12 représentent une variante du plancher selon l'invention.

Dans cette variante, le plancher 1 en matière composite 7 n'est pas directement surmoulé sur la paroi 5b de la bordure 2 en acier, mais sur une couche 12 en matière plastique souple qui adhère à la paroi 5b, mais pas à la matière composite 7 du plancher 1 qui est surmoulée sur cette couche.

La matière plastique souple de cette couche 12 peut être de l'EPDM.

Comme dans la réalisation décrite plus haut, la paroi 5b comporte des trous 8 permettant le passage de la matière plastique souple constituant la couche 12.

Grâce à ces trous 8, la matière plastique souple de la couche 12 est solidement accrochée à la paroi 5b de la bordure en acier 2.

La matière composite 7 du plancher 1 qui est surmoulée sur la couche 12, comme montré sur les figures 10 et 11, n'adhère pas à cette couche 12, de sorte que l'on peut désaccoupler le plancher 1 de la bordure 2 en cas de détérioration de ce plancher 1, par exemple à la suite d'un accident.

Les figures 8 à 11 montrent que la couche 12 en matière plastique souple présente en regard des trous 8 des excroissances 13 en saillie sur la surface extérieure de la couche 12, comme montré sur les figures 8 et 9.

Ces excroissances 13 sont recouvertes par la matière composite 7 du plancher 1 et permettent à cette matière 7 de s'accrocher à la couche 12.

Le plancher que l'on vient de décrire présente les principaux avantages suivants :
- ce plancher permet une diminution de masse de l'ordre de 3 kg par véhicule,
- étant donné qu'il permet de supprimer l'opération de collage et de vissage, il économise la main d'oeuvre correspondante,
- pour cette raison, il apporte un gain en ergonomie.

Par ailleurs, le plancher selon l'invention est compatible avec la diversité des véhicules d'une même famille.

Ainsi pour modifier la longueur du plancher, il suffit de modifier la longueur des deux parties latérales en tôle d'acier 5 et 6, représentées sur les figures 2 et 3, ce qui est facile à réaliser puisqu'il suffit d'utiliser des tronçons de profilés plus ou moins longs.

Dans la variante représentée sur les figures 8 à 12, le plancher 1 présente en outre l'avantage de pouvoir être remplacé facilement en cas de dommage.

De plus, compte tenu de la souplesse de la couche 12, celle-ci protège le plancher 1 des risques de fissuration ou de casse due aux différents efforts transmis au plancher 1.

## Revendications

1. Plancher arrière de charge (1) en matière composite (7) pour véhicule automobile constituée par une résine en matière plastique chargée de fibres, la périphérie du plancher (1) comportant une bordure (2) en métal destinée à être soudée à la partie arrière en métal du soubassement (9) d'un véhicule automobile, **caractérisé en ce que** ladite bordure en métal (2) est liée par surmoulage à ladite matière composite (7), et forme un cadre constitué de quatre parties (3, 4, 5, 6) à savoir une partie avant (3), une partie arrière (4) et deux parties latérales (5, 6), dont les parties avant (3) et arrière (4) sont embouties et les deux parties latérales (5, 6) sont obtenues par profilage.

2. Plancher arrière selon la revendication 1, **caractérisé en ce que** ladite bordure en métal (2) est en tôle d'acier soudable par points de soudure électrique ou par laser à la tôle d'acier constituant la partie arrière du soubassement (9) du véhicule.

3. Plancher arrière selon la revendication 2, **caractérisé en ce que** la tôle d'acier de la bordure (2) présente les mêmes caractéristiques que celles de la tôle d'acier d'un plancher arrière entièrement constituée par une tôle d'acier.

4. Plancher arrière selon l'une des revendications 1 à 3, **caractérisé en ce que** lesdites parties (3, 4, 5, 6) comprennent chacune une première paroi (5a) destinée à être appliquée et soudée à une partie arrière sensiblement horizontale du soubassement (9) du véhicule et une seconde paroi (5b) perpendiculaire à ladite première paroi (5a) qui est liée par surmoulage à la matière composite (7) du plancher (1).

5. Plancher arrière selon la revendication 4, **caractérisé en ce que** ladite seconde paroi (5b) présente des trous (8) permettant le passage de la matière composite (7) lors du surmoulage.

6. Plancher arrière selon l'une des revendications 1 à 3, **caractérisé en ce que** ladite bordure en métal (2) est liée par surmoulage à une couche (12) en matière plastique souple qui recouvre partiellement cette bordure (2), ladite matière composite (7) étant surmoulée sur cette couche (12) en matière plastique souple.

7. Plancher arrière selon la revendication 6, **caractérisé en ce que** ladite bordure en métal (2) comporte des trous (8) permettant le passage de la matière plastique souple constituant ladite couche (12).

8. Plancher arrière selon la revendication 7, **caractérisé en ce que** ladite couche (12) en matière plastique souple présente en regard de chacun desdits trous (8) des excroissances (13) en saillie sur la surface extérieure de ladite couche (12).

## Patentansprüche

1. Heckboden zum Laden (1) aus Verbundstoff (7) für ein Kraftfahrzeug, der aus einem faserverstärkten Kunststoffharz besteht, wobei der Umfang des Bodens (1) einen Metallrand (2) umfasst, der dazu bestimmt ist, an den hinteren Metallteil des Unterbaus (9) eines Kraftfahrzeugs geschweißt zu werden, **dadurch gekennzeichnet, dass** der Metallrand (2) durch Anformen mit dem Verbundstoff (7) verbunden ist und einen Rahmen bildet, der aus vier Teilen (3, 4, 5, 6) besteht, nämlich einem vorderen Teil (3), einem hinteren Teil (4) und zwei Seitenteilen (5, 6), von denen der vordere (3) und hintere Teil (4) tiefgezogen sind und die zwei Seitenteile (5, 6) durch Profilwalzen erhalten sind.

2. Heckboden nach Anspruch 1, **dadurch gekennzeichnet, dass** der Metallrand (2) aus Stahlblech ist, das durch Elektro- oder Laserschweißpunkte mit dem Stahlblech verschweißbar ist, aus dem der hintere Teil des Unterbaus (9) des Fahrzeugs besteht.

3. Heckboden nach Anspruch 2, **dadurch gekennzeichnet, dass** das Stahlblech des Randes (2) die gleichen Merkmale aufweist wie diejenigen des Strahlblechs eines Heckbodens, der vollständig aus einem Stahlblech besteht.

4. Heckboden nach einem der Ansprüche 1 bis 3, **dadurch gekennzeichnet, dass** die Teile (3, 4, 5, 6) jeder eine erste Wand (5a) umfassen, die dazu bestimmt ist, an einen im Wesentlichen waagrechten hinteren Teil des Unterbaus (9) des Fahrzeugs angelegt und angeschweißt zu werden, und eine zur ersten Wand (5a) senkrechte zweite Wand (5b), die durch Anformen mit dem Verbundwerkstoff (7) des Bodens (1) verbunden ist.

5. Heckboden nach Anspruch 4, **dadurch gekennzeichnet, dass** die zweite Wand (5b) Löcher (8) aufweist, die beim Anformen den Durchtritt des Verbundstoffs (7) ermöglichen.

6. Heckboden nach einem der Ansprüche 1 bis 3, **dadurch gekennzeichnet, dass** der Metallrand (2) durch Anformen mit einer Schicht (12) aus weichem Kunststoff verbunden ist, die diesen Rand (2) teilweise bedeckt, wobei der Verbundstoff (7) auf dieser Schicht (12) aus weichem Kunststoff angeformt ist.

7. Heckboden nach Anspruch 6, **dadurch gekennzeichnet, dass** der Metallrand (2) Löcher (8) umfasst, die den Durchtritt des weichen Kunststoffs, aus dem die Schicht (12) besteht, ermöglichen.

8. Heckboden nach Anspruch 7, **dadurch gekennzeichnet, dass** die Schicht (12) aus weichem Kunststoff gegenüber jedem der Löcher (8) Auswüchse (13) aufweist, die an der Außenfläche der Schicht (12) vorspringen.

## Claims

1. Rear floor for loading (1) composite material (7) for an automotive vehicle, constituted by a fibre-loaded plastic material resin, the periphery of the floor (1) comprising a metal edge (2) intended to be welded to a rear metal part of the substructure (9) of an automotive vehicle, **characterised in that** said metal edge (2) is connected by overmoulding to said composite material (7), and forms a frame constituted of four parts (3, 4, 5, 6) namely a front part (3), a rear part (4) and two lateral parts (5, 6), of which the front (3) and rear (4) parts are stamped and the two lateral parts (5, 6) are obtained by shaping.

2. Rear floor according to claim 1, **characterised in that** said metal edge (2) is made of sheet steel, weldable by electric welding points or by lasering the sheet steel constituting the rear part of the substructure (9) of the vehicle.

3. Rear floor according to claim 2, **characterised in that** the sheet steel of the edge (2) has the same characteristics as those of sheet steel of a rear floor, fully constituted by sheet steel.

4. Rear floor according to one of the claims 1 to 3, **characterised in that** said parts (3, 4, 5, 6) each comprise a first wall (5a) intended to be applied and welded to a substantially horizontal rear part of the substructure (9) of the vehicle, and a second wall (5b), perpendicular to said first wall (5a) which is connected by overmoulding to the composite material (7) of the floor (1).

5. Rear floor according to claim 4, **characterised in that** said second wall (5b) has holes (8) enabling the passage of the composite material (7) during the overmoulding.

6. Rear floor according to one of the claims 1 to 3, **characterised in that** said metal edge (2) is connected by overmoulding to a flexible plastic material layer (12) which partially covers this edge (2), said composite material (7) being overmoulded on this flexible plastic material layer (12).

7. Rear floor according to claim 6, **characterised in that** said metal edge (2) comprises holes (8) enabling the passage of the flexible plastic material constituting said layer (12).

8. Rear floor according to claim 7, **characterised in that** said flexible plastic material layer (12) has opposite each one of said holes (8), protruding excrescences (13) on the exterior surface of said layer (12).
